# EUROPÄISCHE PATENTSCHRIFT

(11) **EP 0 731 776 B1**
(45) Veröffentlichungstag und Bekanntmachung des Hinweises auf die Patenterteilung: **10.06.1998**
(21) Anmeldenummer: 95900770.9
(22) Anmeldetag: 29.11.1994
(51) Int. Cl.: C02F 1/50, D21H 17/03

(54) **ÖL-IN-WASSER-EMULSIONEN ALS ERSATZ FÜR MIKROBIZIDE (BIOZIDE) IN WASSERFÜHRENDEN SYSTEMEN**
OIL-IN-WATER EMULSIONS AS MICROBICIDE (BIOCIDE) SUBSTITUTES IN WATER CARRYING SYSTEMS
EMULSIONS HUILE DANS EAU UTILISEES A LA PLACE DE MICROBICIDES (BIOCIDES) DANS DES SYSTEMES DE CONDUITES D'EAU

(30) Priorität: 30.11.1993 DE 4340665
(43) Veröffentlichungstag der Anmeldung: 18.09.1996
(73) Patentinhaber: Stockhausen GmbH & Co. KG, 47805 Krefeld (DE)
(72) Erfinder: WERRES, Joachim, D-49457 Drebber (DE)
(74) Vertreter: Klöpsch, Gerald, Dr.-Ing. Patentanwalt
(86) Internationale Anmeldenummer: EP9403883
(87) Internationale Veröffentlichungsnummer: WO9515296

(56) Entgegenhaltungen:
- EP-A- 0 422 948
- EP-A- 0 517 360
- GB-A- 2 138 798
- SOVIET INVENTIONS ILLUSTRATED, D15 Sektion, Woche 9316, ver!ffentlicht 1993, 9 Juni, DERWENT PUBLICATIONS LTD., London; & SU,A,1730 047 (UKR MECH TOOLS).
- SOVIET INVENTIONS ILLUSTRATED, Q49 Sektion, Woche 9030, ver!ffentlicht 1990, 5 September, DERWENT PUBLICATIONS LTD., London; & SU,A,1535 841 (BASHKIR UNIV).

## Beschreibung

Die Erfindung betrifft die Verwendung von Mitteln zur Verhinderung der Schleimbildung durch Mikroorganismen und zur Verhinderung von Mikrobenwachstum in wasserführenden Systemen.

Wasserführende Systeme wie Wasser- und Abwasserleitungssysteme, Kühl- oder Heizkreisläufe, Kühlschmiermittelsysteme, Bohrspülungen oder Produktionsprozeßwässer zum Stofftransport enthalten eine Vielzahl von Mikroorganismen wie beispielsweise Bakterien der Art Pseudomonas vesicularis, Enterobacter cloacae, Citrobacter freundii und Enterobacter amnigenus, die wegen der in diesen Systemen anzutreffenden Bedingungen ein schnelles Wachstum aufweisen. Durch die Vermehrung und den Stoffwechsel der Mikroorganismen kommt es daher zur Bildung von biologischen Massen in diesen Medien, die beispielsweise als Bakterienmasse oder als Schleime an Anlagenteilen haften, Ablagerungen bilden und in Form größerer Teile abgelöst werden und zu Störungen in Aggregaten und Produktionsmassen führen.

Insbesondere bei der Papierherstellung müssen diese Vorgänge im Produktionsprozeß verhindert werden, wozu zur Zeit Mikrobizide (Biozide, Slimicides) auf der Basis intensiv wirkender, toxischer Stoffe eingesetzt werden, die nach J. Weigl, R. Grenz und H. L. Baumgarten Grundlagen der Chemie für Papieringenieure PTS-Verlag München 1992 5.2 - 5.45 und nach Papermaking Additives Committee of the Paper and Board Manufacture Division, Committee Assignment Nº 5148, K. J. Hipolit, TAPPI PRESS 1992 (S. 14), aus bestimmten Bromverbindungen, Isothiazolonen, Dithiocarbonaten, Thiocyanaten sowie bestimmten organischen Schwefelverbindungen oder Cationics und anorganischen Verbindungen, wie Nariumchlorit, Natriumperoxid und Natriumhydrogensulfit ausgewählt werden.

In EP 562 739 A1 wird die Kontrolle der Schleimbildung durch Zusammensetzungen, die Glutaraldehyd und 2-(Thiocyanomethylthio)-benzothiazol enthalten, vorgeschlagen. Weiterhin wurden in der EP 558 360 A1 vorgeschlagen, spezielle Desinfektionsmittel gegen Bakterienstämme vom Typ Staphylococus oder Acinobacter einzusetzen.

In DE 41 36 445 A1 wird die Erhöhung des Stickstoff- und Phosphatgehaltes im wässrigen Medium zur Beeinflussung des Wachstums der Mikroorganismen unter Abbau bereits gebildeter Schleimstoffe beschrieben und vorgeschlagen, dabei sporadisch bekannte Mikrobizide, wie Isothiazolone (Handelsname Kathoon), Dibromnitrolopropionamid oder Methylenbisisothiocyanat einzusetzen.

Neben den Problemen, die mit der sicheren Handhabung und dem Transport solcher toxischen Stoffe verbunden sind und der Beschränkung der Wirkung auf den gewünschten Einsatzbereich ist es notwendig, mehrere dieser Mikrobizide in Kombination und im Wechsel nacheinander einzusetzen, um der Resistenz der Mikrooganismen gegen das gerade eingesetzte Produkt zu begegnen.

Im EP 517 360 A1 wird zum Recycling von Altpapier die Verwendung einer Mischung aus einem Tensid und einem Kohlenwasserstoff, insbesondere von Terpen, zur Inhibierung von klebrigen Verunreinigungen im Papierstoff beschrieben. Von flüchtigen Terpenoiden ist bisher die allelopathische Wirkung im Pflanzenbereich bekannt.

Aufgabe der Erfindung war es daher, zur Verhinderung der Schleimbildung und Verminderung des Mikrobenwachstums in wasserführenden Systemen Stoffe bzw. Zusammensetzungen bereitzustellen, die gegenüber den bekannten, für den gleichen Zweck bisher eingesetzten Bioziden und Limiciden nur geringe Toxizität aufweisen, leicht aus einfach zugänglichen Komponenten herstellbar sind und dennoch zuverlässig wirksam sind.

Die Aufgabe wurde erfindungsgemäß durch die Verwendung von Öl-in-Wasser-Emulsionen gelöst, die aus einer hydrophoben Phase (Ölphase), mindestens einem Emulgator und Wasser gebildet sind und die in der hydrophoben Phase mindestens einen Wirkstoff enthalten, welcher aus der nachfolgend aufgeführten Gruppe von Stoffen, die allein oder in Mischung eingesetzt werden, ausgewählt ist:
1. einen gesättigten oder ungesättigten, offenkettigen oder zyklischen, normalen oder isomeren Kohlenwasserstoff mit 8 - 30 Kohlenstoffatomen
2. einen gesättigten oder ungesättigten Fettalkohol, eine gesättigte oder ungesättigte Fettsäure, einen Fettsäuremonoalkylester, ein Fettsäureamid oder ein Fettsäuremonoalkylamid einer gesättigten oder ungesättigten Fettsäure, sämtliche unter 2 aufgeführten Verbindungen mit 8 bis 30 Kohlenstoffatomen
3. einen Mono- oder Polyester einer gesättigten oder ungesättigten Fettsäure mit 4 bis 30 Kohlenstoffatomen und Monoalkoholen und/oder Polyolen, ausgenommen Polyethylenglykole
4. ein Polyamid von gesättigten oder ungesättigten Fettsäuren mit 8 bis 30 Kohlenstoffatomen und aliphatischen Polyaminen mit zwei bis sechs Stickstoffatomen 5. ein acyclisches, vorzugsweise monocyclisches und/oder bicyclisches Terpen, insbesondere einen Terpenkohlenwasserstoff und/oder einen Terpenalkohol und/oder
6. eine Polyoxyalkylenverbindung auf der Basis von Alkylenoxiden und C₁₂-C₁₈ Fettalkoholen und/oder C₁₂-C₁₈ Fettsäuren und/oder Fettsäureglyceriden von C₁₂-C₁₈ Fettsäuren.

Die beschriebenen Öl-in-Wasser-Emulsionen sind aus verschiedenen Bereichen bekannt. Es war jedoch überraschend festzustellen, daß diese Emulsionen die Eigenschaft haben, Störungen, bedingt durch Bakterienmassen oder Stoffwechselprodukte, wie Schleime in wässrigen Systemen, insbesondere bei der Papierherstellung zu vermeiden.

Ebenso sind die beschriebenen Öl-in-Wasser-Emulsionen zum Einsatz gegen Mikroorganismen in wäßrigen Systemen bei der Zuckerherstellung aus Zuckerrüben geeignet.

Die Herstellung der erfindungsgemäß zu verwendenden Emulsionen, insbesondere stabiler Öl-in-Wasser-Emulsionen ist bekannt. Hierzu wird die Ölkomponente in Wasser mittels geeigneter bekannter Öl-in-Wasser-Emulgatoren emulgiert. Die hydrophobe Phase stellt überwiegend den Wirkstoff dar.

Beispielhaft sind als hydrophobe Ölkomponente zu nennen:
- gesättigte Kohlenwasserstoffe wie Octan, Tetradecan, Octadecan, Eisodecan, Decen, Hexadecen und technische alpha-Olefine
- Fettalkohole wie Octanol, Dodecanol, Tridecanol, Hexadecanol, Octadecanol, Behenylalkohol
- Fettsäuren wie Caprinsäure, Stearinsäure, Melissinsäure, Ölsäure und Linolensäure
- Fettsäureester wie Stearylsäuremethylester, Palmitinsäureoctadecylester, Ölsäureoctylester, Glycerinmono- und -trioleat, Ethylenglykoldilaurat, Sorbitanstearate und -oleate
- Fettsäureamide wie Stearylamid, Kokosfesttsäurebutylamid, Essigsäureoleylamid und Ethylenbisstearylamid.

Terpene, wie Menthol oder Orangenterpen (Firma Weißmer Baltische HG, Hamburg).

Weitere geeignete handelsübliche Kohlenwasserstoffe oder Kohlenwasserstoffgemische sind Paraffinöl oder Mineralöl.

Desweiteren sind Fette und Öle auf nativer Basis geeignet, insbesondere pflanzliche Öle und bevorzugt Rapsöl.

Die gesättigten oder ungesättigten Fettalkohole, die erfindungsgemäß als Wirkstoff eingesetzt werden können, sind nach bekannten Verfahren, z. B. der Oxosynthese als Oxoalkohole oder nach der Guerbet-Reaktion als Guerbet-Alkohole erhältlich.

Als Polyoxyalkylenverbindung auf der Basis von Alkylenoxiden und/oder Fettsäureglyceriden von C₁₂-C₁₈ Fettsäuren werden solche verwendet, die unter anderem in der DE-AS 1 270 542 und der EP 0 247 509 B1 beschrieben werden.

Bei Einsatz von Terpenen werden diese bevorzugt in Mischung mit einem gesättigten oder ungesättigten Fettalkohol eingesetzt.

Der Anteil der Ölphase in der Öl-in-Wasser-Emulsion beträgt 1 bis 90 Gew.-%, vorzugsweise 1 bis 50 Gew.-% und besonders bevorzugt 5 bis 30 Gew-% der Gesamtemulsion. Die erfindungsgemäß zu verwendenden Emulsionen haben keine oder nur eine geringe Toxizität und können in die Wassergefährdungsklasse 1 eingestuft werden. Sie sind, insbesondere in Kläranlagen ohne nachteilige Beeinflussung der dort ablaufenden Prozesse, biologisch abbaubar und sehr umweltfreundlich.

Die erfindungsgemäß zu verwendenden Mittel werden als solche oder in Verdünnung mit Wasser oder Wasser und/oder lösungsmittelhaltigen Mischungen eingesetzt. Der Zugabeort kann beliebig gewählt werden, vorzugsweise erfolgt die ein- oder mehrfache oder kontinuierliche Zugabe zum wasserführenden System an den Orten, wo eine hohe Belastung durch Mikroben oder deren Stoffwechselprodukte eintritt, beispielsweise bei der Papierherstellung, bei Stoffzuflüssen aus Altpapieranteilen oder anderen Recycling-Materialien.

Die Zugabemenge an Öl-in-Wasser-Emulsionen beträgt 1 - 200 ppm, vorzugsweise 5 - 100 ppm besonders bevorzugt 10 - 50 ppm bezogen auf das gesamte wasserführende System.

Die Erfindung wird durch die nachfolgenden Beispiele erläutert:

### Herstellung einer Paraffin Emulsion A

14 kg Paraffin (Schmelzpunkt 48 - 50 °C), 1,0 kg Hexadecanol, 7 kg eines 75%igen Paraffinsulfönats und 2,1 kg Wasser werden homogen aufgeschmolzen und anschließend unter Rühren in eine 60 °C warme Lösung aus 74,5 kg Wasser und 1,4 kg eines mit 20 Mol Ethylenoxid umgesetzten Oleylalkohols eingegossen. Es entsteht eine Öl-in-Wasser-Emulsion mit ca. 20,5 % Festkörper.

### Herstellung einer Terpen-Emulsion B

Es wurde wie bei der Herstellung der Emulsion A verfahren mit dem Unterschied, daß 14 kg Terpen anstelle Paraffin eingesetzt wurden.

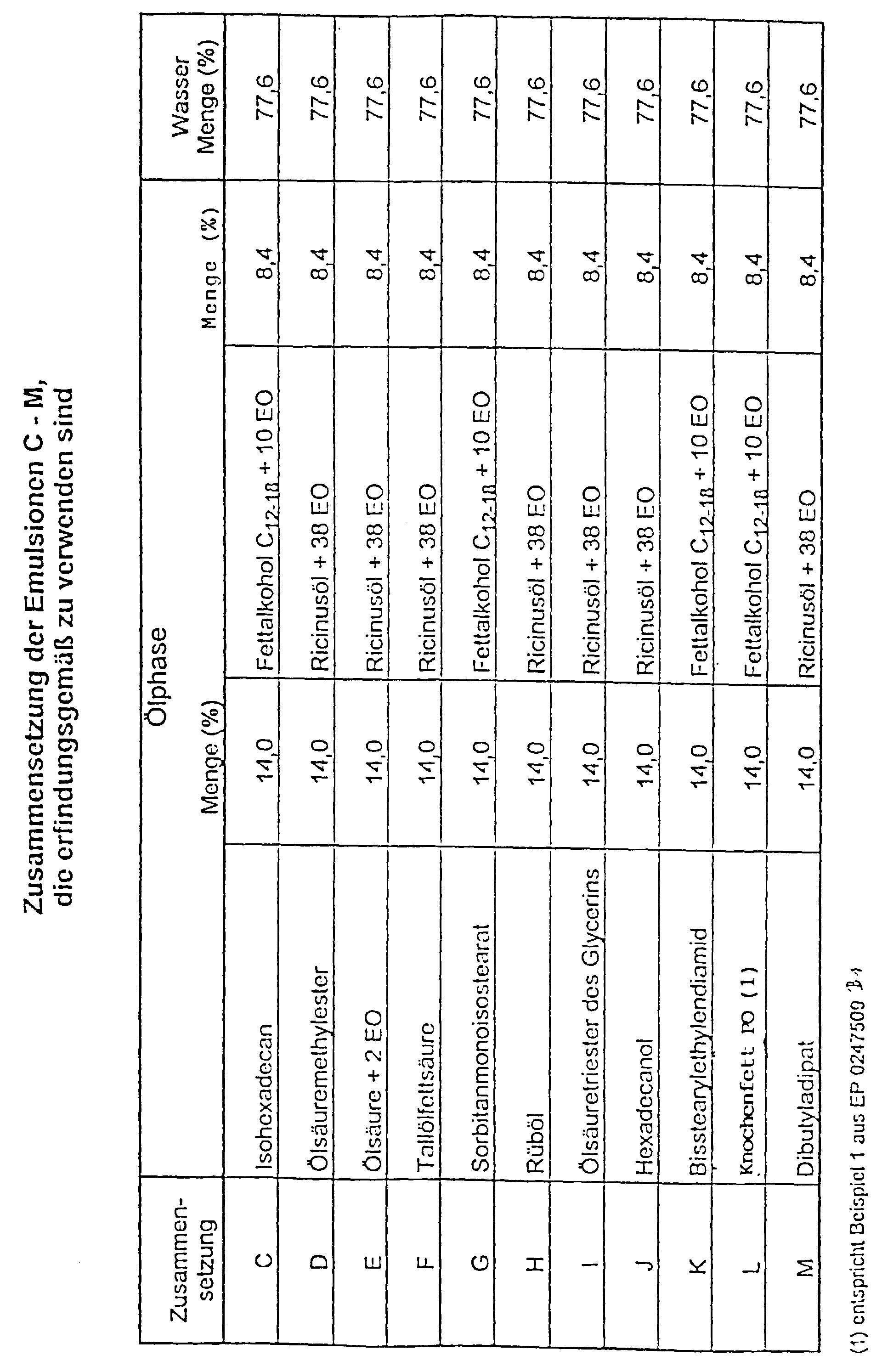

### Beispiel 1

Auf einer Papiermaschine wurden unter Ersatz des bisher verwendeten Bakterizids Retardol 20, ein Handelsprodukt der Fa. CHUPA GmbH, D-86399 Bobingen, das als Wirkstoff Alkylbenzylammoniumchlorid in wäßriger Lösung enthält, dem 5%igen Dickstoffstrom 400 g der Öl-in-Wasser-Emulsion A, bezogen auf 1 t Papier, zugesetzt.

Nach 15 Tagen wurde wiederum Retardol 20 mengengleich eingesetzt und nach 22 Tagen wiederum mengengleich auf die Öl-in-Wasser-Emulsion A umgestellt.

Die Keimzahl im verdünnten Gesamtstoff wurde unter Ausnutzung des Bioluminiszenseffektes bei Luziferin/Luziferase-ATP-Oxidation entsprechend der Veröffentlichung im Wochenblatt für die Papierfabrikation 23/24 (1980) S. 941 - 944 gemessen und als "Relative Lichteinheit (RLU)" angegeben, wobei niedrige RLU-Werte einer niedrigen Bakterienanzahl entsprechen.

Die Daten sind in Tabelle 1 zusammengefaßt.

**Tabelle 1**

| **Tag** | **RLU (in Tausend)** | |
|---|---|---|
| 1 | 87 | Umstellung auf Emulsion A |
| 3 | 194 | |
| 5 | 174 | |
| 9 | 100 | |
| 14 | 85 | |
| 15 | 91 | Umstellung auf Biozid |
| 17 | 215 | |
| 21 | 204 | |
| 22 | 280 | Umstellung auf Emulsion A |
| 24 | 245 | |
| 29 | 178 | |
| 31 | 80 | |
| 35 | 89 | |

Sowohl bei der jeweiligen Umstellung auf die Öl-in-Wasser-Emulsion A als auch bei der Umstellung auf Retardol 20 steigt die Keimzahl kurz an. Anschließend wird durch den Zusatz der Öl-in-Wasser-Emulsion A die Keimzahl abgesenkt, wobei ein Niveau erreicht und gehalten wird, das dem des herkömmlichen Biozids entspricht. Das Bakterienwachstum wird deutlich gehemmt. Während des Versuchs wurde keine Schleimbildung beobachtet.

Der Produktionsprozeß verlief störungsfrei und lieferte gleichbleibend die geforderte Papierqualität.

### Beispiel 2

Der Versuch gemäß Beispiel 1 wurde auf einer zweiten Papiermaschine mit veränderter Stoffzusammensetzung wiederholt. Anstelle Retardol 20 wurden wiederum mengengleich 400 g der Öl-in-Wasser-Emulsion A zugesetzt. Die Bestimmung der Keimzahl erfolgte wie in Beipiel 1. Die Daten sind in Tabelle 2 zusammengefaßt.

**Tabelle 2**

| **Tag** | **RLU (in Tausend)** | |
|---|---|---|
| 1 | 13,6 | Umstellung auf Emulsion A |
| 3 | 11 | |
| 5 | 30 | |
| 6 | 8 | |
| 7 | 6,6 | |
| 8 | 12 | |
| 10 | 11 | |

Es wurde keine Schleimbildung festgestellt. Der Produktionsprozeß verlief störungsfrei.

### Beispiel 3

Auf einer Papiermaschine eines anderen Produzenten wurden anstelle der Biozide Daracide^{R} und Daracide^{R} (Fa. Grace) mengengleich 400 g der Öl-in-Wasser-Emulsion B, bezogen auf 1 t Papier, einem 5%igen Dickstoffstrom aus Altpapier zugesetzt. Die ausschließliche Verwendung von Altpapier hat üblicherweise eine hohe Keimbelastung zur Folge. Die Keimzahlbestimmung erfolgte im Siebwasser nach der Zählenmethode. Deutsches Arzneimittelbuch 10. Ausgabe, 1991, V2.1.8 Prüfung auf mikrobielle Verunreinigungen bei nicht sterilen Produkten.

Die Daten sind in Tabelle 3 zusammengefaßt.

**Tabelle 3**

| **Tag** | **Gesamtkeimzahl/ml** **(in Millionen)** | |
|---|---|---|
| 1 | 42 | mit 2 Bioziden |
| 2 | 54 | mit 2 Bioziden |
| 3 | 38 | Umstellung auf Emulsion B |
| 5 | 18 | |
| 7 | 1,6 | |
| 9 | 0,9 | |
| 11 | 1,5 | |
| 15 | 5,0 | |
| 18 | 6,1 | |
| 20 | 3,5 | |

Durch den Ersatz der beiden zuvor verwendeten Biozide durch die Öl-in-Wasser-Emulsion B konnte die Keimzahl auf 90 % des ursprünglichen Werts gesenkt werden. Es wurde keine Schleimbildung festgestellt und die Produktion verlief störungsfrei.

### Beispiel 4

In einer Deinking-Anlage wird Wasserstoffperoxid zum Bleichen eingesetzt. Katalasebildende Bakterien zersetzen das im Prozeß eingesetzte Wasserstoffperoxid vorzeitig, sodaß das deinkte Papier einen zu niedrigen Weißgrad zeigt, sofern die Einsatzmenge von Wasserperoxid nicht wesentlich erhöht wird.

400 g Emulsion A pro Tonne Papier wurden in das Recycle-Wasser der Deinking Anlage dosiert.

Die Entwicklung der Keimzahl im Recycle-Wasser wurde, analog zu Beispiel 1, mit Hilfe der ATP-Oxidation gemessen. Die Menge an Katalase wurde indirekt über die Abnahme der H₂O₂-Menge im Recycle-Wasser innerhalb von 10 Minuten bestimmt.

Die Ergebnisse sind in der Tabelle 4 dargestellt.

**Tabelle 4**

| Tag | RLU | H₂O₂-Abnahme mg/l in 10 Min. | |
|---|---|---|---|
| 1 | 3745 | 305 | Beginn Dosierung Emulsion A |
| 2 | 1086 | 223 | |
| 3 | 286 | 27 | |
| 4 | 191 | 0 | |

Die Ergebnisse zeigen die deutliche Verminderung der Keimzahl, die Katalase-bedingte Zersetzung des Wasserstoffperoxids wird zunehmend reduziert bzw. ganz verhindert.

### Beispiel 5

Auf einer Papiermaschine, die Altpapier verarbeitet, und wo nur sporadisch Biozide zum Einsatz kommen, wurden 400 g der Emulsion C pro Tonne produziertes Papier dem Siebwasser zugesetzt.
Die Keimzahlbestimmung erfolgte wie im Beispiel 3 beschrieben.
Nach einer Woche war die Keimzahl von 7 Millionen auf achthunderttausend (-90 %) zurückgegangen; eine Schleimbildung wurde nicht festgestellt.

### Beispiel 6

Auf einer Papiermaschine, die Zellstoff und Altpapier verarbeitet und wöchentlich gereinigt werden muß, wurden 300 g der Emulsion E pro Tonne produziertes Papier dem Siebwasser zugesetzt. Die Keimzahlbestimmung erfolgte wie im Beispiel 3 beschrieben. Nach einer Woche war die Keimzahl um 65 % zurückgegangen. Eine Schleimbildung konnte nicht festgestellt werden und das Reinigungsintervall konnte auf 14 Tage ausgedehnt werden.

### Beispiele 7 bis 9

Das Beispiel 6 wurde wiederholt mit den Emulsionen H, L und M anstelle von Emulsion E:

| Emulsion | Einsatzmenge | Keimzahlrückgang |
|---|---|---|
| H | 500 g | 50 % |
| L | 450 g | 55 % |
| M | 350 g | 90 % |

Es wurde keine Schleimbildung beobachtet und die Reinigungsintervalle konnten ausgedehnt werden.

### Beispiel 10

Emulsion A wurde mit 15 ppm in das Kreislaufwasser eines Kraftwerkes dosiert. Trotz Einsatz von Bioziden war das Kreislaufwasser durch Bioschleime zu Beginn des Versuches stark verschmutzt. Nach 3 Wochen, in denen Emulsion A mit 15 ppm dosiert und die Biozidmenge halbiert worden war, war das Kreislaufwasser signifikant sauberer geworden.

### Beispiel 11

Statt des vorher in stoßweiser Dosierung von 100 ppm eingesetzten Formalins wurde als Mikrobizidersatz in der Zuckerindustrie die Zusammensetzung B (Terpenemulsion B) bei der Extraktions-Schnitzelmaische im Gegenstromverfahren und im Extraktionsturm über die Dosierung in das Frischwasser zugesetzt. Die Extraktion der Zuckerrübenschnitzel erfolgte bei 70 - 72 °C. Die Zugabemenge der Zusammensetzung B betrug kontinuierlich 25 ppm. Die Wirkung des Zusatzes auf die Bakterientätigkeit wurde analytisch durch die Bestimmung des durch die Bakterien erzeugten Lactatgehaltes im Rohsaft hinter der Extraktionsmaische und im Rohsaft aus der Mitte des Extraktionsturmes sowie durch die Messung der pH-Werte dieser Säfte bestimmt.

Die Zugabe vom 25 ppm Zusammensetzung B reduziert die Bakterientätigkeit deutlich. Die Zugabemenge wird in der Regel so gewählt, daß ein verbleibender Lactat-Gehalt eine gute Abpressbarkeit der extrahierten Rübenschnitzel auf den gewünschten Trockengrad gewährleistet. Die Versuchsdaten sind in der folgenden Tabelle 4 zusammengefaßt:

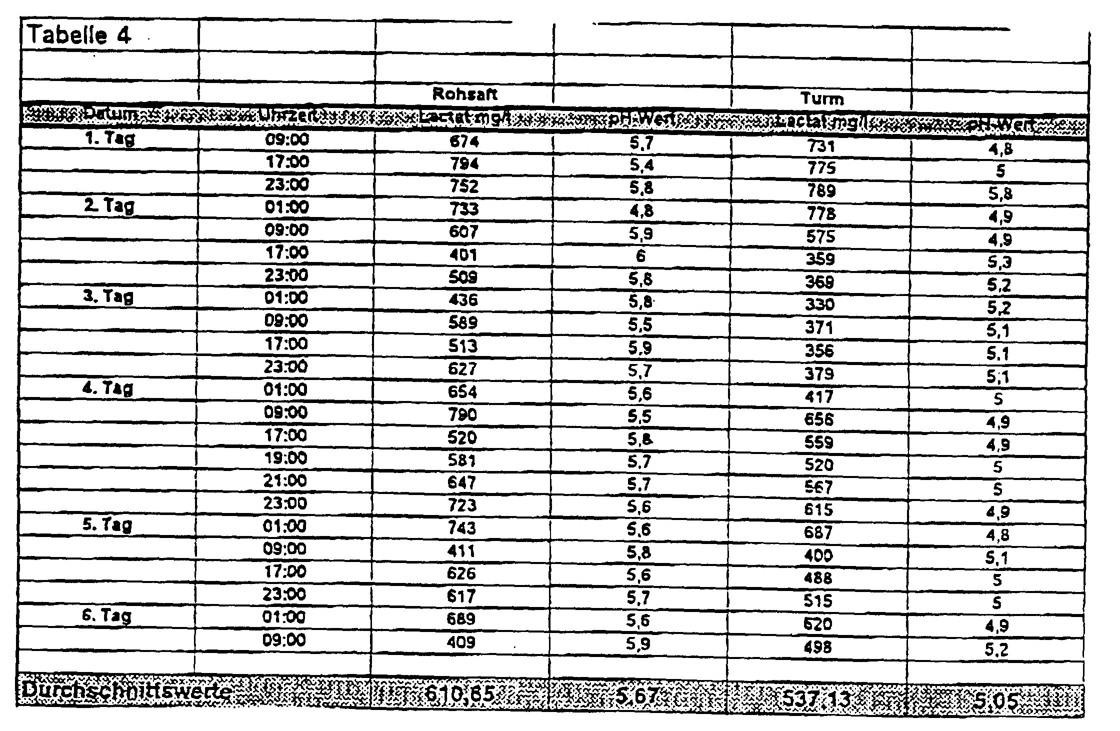

Die Versuchsdaten belegen, daß die bisher bei der Formalindosierung akzeptierte Lactat-Obergrenze von 800 mg/l deutlich unterschritten wird und geringe Zuckerverluste auch ohne Formalin-Zugabe erreicht werden.

## Patentansprüche

1. Verwendung von Öl-in-Wasser-Emulsionen zur Verhinderung der Schleimbildung und Verminderung des Mikrobenwachstums in wasserführenden Systemen, insbesondere in Prozeßwässern zum Stofftransport und Wärmeaustausch, dadurch gekennzeichnet, daß sie mindestens einen Emulgator für die Ölphase und als Bestandteil der Ölphase wenigstens einen der folgenden Stoffe allein oder in Mischung untereinander enthalten:
1. einen gesättigten oder ungesättigten, offenkettigen oder zyklischen, normalen oder isomeren Kohlenwasserstoff mit 8 - 30 Kohlenstoffatomen
2. einen gesättigten oder ungesättigten Fettalkohol, eine gesättigte oder ungesättigte Fettsäure, einen Fettsäuremonoalkylester, ein Fettsäureamid oder ein Fettsäuremonoalkylamid einer gesättigten oder ungesättigten Fettsäure, wobei der Fettalkohol, die Fettsäuren und Fettsäurereste der aufgeführten Verbindungen 8 bis 30 Kohlenstoffatome aufweisen
3. einen Mono- oder Polyester einer gesättigten oder ungesättigten Fettsäure mit 4 bis 30 Kohlenstoffatomen und einem Monoalkohol und/oder einem Polyol, ausgenommen Polyethylenglykole
4. ein Polyamid von gesättigten oder ungesättigten Fettsäuren mit 8 bis 30 Kohlenstoffatomen und aliphatischen Polyaminen mit zwei bis sechs Stickstoffatomen
5. ein acyclisches, vorzugsweise monocyclisches und/oder bicyclisches Terpen, insbesondere einen Terpenkohlenwasserstoff und/oder einen Terpenalkohol und/oder
6. eine Polyoxyalkylenverbindung auf der Basis von Alkylenoxiden und C₁₂-C₁₈ Fettalkoholen und/oder C₁₂-C₁₈Fettsäuren und/oder Fettsäureglyceriden von C₁₂-C₁₈ Fettsäuren.

2. Verwendung nach Anspruch 1, gekennzeichnet durch eine Kombination von wenigstens einem gesättigten oder ungesättigten Fettalkohol zusammen mit wenigstens einem azyklischen, vorzugsweise monozyklischen und/oder bizyklischen Terpen.

3. Verwendung von Öl-in-Wasser-Emulsionen nach Anspruch 1, dadurch gekennzeichnet, daß sie als gesättigten Kohlenwasserstoff Octan, Tetradecan, Ocatadecan und/oder als ungesättigten Kohlenwasserstoff Decen, Hexadecen und/oder technische alpha-Olefine enthalten.

4. Verwendung von Öl-in-Wasser-Emulsionen nach den Anspruch 1, dadurch gekennzeichnet, daß sie als Fettalkohole Octanol, Dodecanol, Tridecanol, Hexadecanol, Octadecanol und/oder Behenylalkohol enthalten.

5. Verwendung der Emulsion nach einem der Ansprüche 1 bis 4, dadurch gekennzeichnet, daß sie als Fettsäuren Caprinsäure, Stearinsäure, Melissinsäure, Ölsäure und/oder Linolensäure enthält.

6. Verwendung von Öl-in-Wasser-Emulsionen nach den Ansprüchen 1 bis 5, dadurch gekennzeichnet, daß sie als Fettsäureester Stearylsauremethylester, Palmitinsäureoctadecylester, Ölsäureoctylester, Glycerinmono- und/oder -trioleat, Ethylenglykoldilaurat, Sorbitanstearate und/oder -oleate und/oder Adipinsäuredibutylester enthalten.

7. Verwendung von Öl-in-Wasser-Emulsionen nach einem der Ansprüche 1 bis 6, dadurch gekennzeichnet, daß sie als Fettsäureamid Stearylamid, Kokosfettsäurebutylamid, Essigsäureoleylamid und/oder Ethylenbisstearylamid enthalten.

8. Verwendung von Öl-in-Wasser-Emulsionen nach einem der Ansprüche 1 bis 7, dadurch gekennzeichnet, daß sie als Polyoxyalkylenverbindung Polyethylenoxid und/oder Polypropylenoxid enthält, wobei der Ethylenoxidanteil 0 bis 20 Gew.-% im Polymeren beträgt.

9. Verwendung von Öl-in-Wasser-Emulsionen nach einem der Ansprüche 1 bis 8, dadurch gekennzeichnet, daß sie als natürliches Öl Rapsöl enthalten.

10. Verwendung von Öl-in-Wasser-Emulsionen nach den Ansprüchen 1 bis 9, dadurch gekennzeichnet, daß sie einen Anteil der Ölphase von 1 bis 90 Gew.-%, vorzugsweise von 1 bis 50 Gew.-% und besonders bevorzugt von 5 bis 30 Gew.-% bezogen auf die Gesamtemulsion enthalten und dem wasserführenden System in einer Menge von 1 - 200 ppm, vorzugsweise 5 - 100 ppm und besonders bevorzugt von 10 bis 50 ppm zugesetzt werden.

11. Verwendung der Öl-in-Wasser-Emulsion nach den Ansprüchen 1 bis 10 bei der Papierherstellung.

12. Verwendung der Öl-in-Wasser-Emulsion nach Anspruch 11 im Deinking-Prozeß, insbesondere zur Verhinderung der Zersetzung von Wasserstoffperoxid durch Katalase.

13. Verwendung der Öl-in-Wasser-Emulsion nach den Ansprüche 1 bis 10 bei der Zuckergewinnung aus Zuckerrüben, insbesondere zur Behandlung wäßriger Suspensionen mit geschnitzelten Zuckerrüben.

14. Verwendung der Öl-in-Wasser-Emulsion nach den Ansprüchen 1 bis 10 in Kühl- und Wärmekreisläufen.

15. Verwendung der Öl-in-Wasser-Emulsion nach den Ansprüchen 1 bis 10 in wasserbasischen Bohrspülungen.

16. Verwendung der Öl-in-Wasser-Emulsion nach den Ansprüchen 1 bis 10 in Brauch- oder Abwassersystemen.

## Claims

1. Use of oil-in-water emulsions to prevent slime formation and reduce microbial growth in water-bearing systems, particularly in process water used for mass transfer and heat exchange, characterized in that the emulsions include at least one emulsifier for the oil phase and as a component of said oil phase, at least one of the following substances alone or mixed with each other:
i) a saturated or unsaturated, open-chain or cyclic, normal or isomeric hydrocarbon having from 8 to 30 carbon atoms;
ii) a saturated or unsaturated fatty alcohol, a saturated or unsaturated fatty acid, a fatty acid monoalkyl ester, a fatty acid amide, or a fatty acid monoalkylamide of a saturated or unsaturated fatty acid, wherein the fatty alcohol, the fatty acids and fatty acid residues in the compounds mentioned have from 8 to 30 carbon atoms;
iii) a mono- or polyester of a saturated or unsaturated fatty acid having from 4 to 30 carbon atoms and a monoalcohol and/or a polyol other than a polyethylene glycol;
iv) a polyamide of saturated or unsaturated fatty acids having from 8 to 30 carbon atoms and aliphatic polyamines having from two to six nitrogen atoms;
v) an acyclic, preferably monocyclic and/or bicyclic terpene, particularly a terpene hydrocarbon and/or a terpene alcohol;
and/or
vi) a polyoxyalkylene compound based on alkylene oxides and C₁₂-C₁₈ fatty alcohols and/or C₁₂-C₁₈ fatty acids and/or fatty acid glycerides of C₁₂-C₁₈ fatty acids.

2. The use according to claim 1, characterized by a combination of at least one saturated or unsaturated fatty alcohol together with at least one acyclic, preferably monocyclic and/or bicyclic terpene.

3. The use of oil-in-water emulsions according to claim 1, characterized in that the emulsions contain octane, tetradecane, octadecane as saturated hydrocarbon, and/or decene, hexadecene and/or technical α-olefines as unsaturated hydrocarbon.

4. The use of oil-in-water emulsions according to claim 1, characterized in that the emulsions contain octanol, dodecanol, tridecanol, hexadecanol, octadecanol, and/or behenyl alcohol as fatty alcohols.

5. The use of the emulsion according to one of claims 1 to 4, characterized in that the emulsion contains capric acid, stearic acid, melissic acid, oleic acid and/or linolenic acid as fatty acids.

6. The use of oil-in-water emulsions according to one of claims 1 to 5, characterized in that the emulsions contain methyl stearate, octadecyl palmitate, octyl oleate, glycerol mono- and/or trioleate, ethylene glycol dilaurate, sorbitan stearates and/or dibutyl adipate as fatty acid esters.

7. The use of oil-in-water emulsions according to one of claims 1 to 6, characterized in that the emulsions contain stearoyl amide, coconut oil fatty acid butylamide, acetic acid oleylamide and/or ethylenebisstearoylamide as fatty acid amide.

8. The use of oil-in-water emulsions according to one of claims 1 to 7, characterized in that the emulsions contain poly(ethylene oxide) and/or poly(propylene oxide) as polyoxyalkylene compound, the ethylene oxide ratio in the polymer being from 0 to 20% by weight.

9. The use of oil-in-water emulsions according to one of claims 1 to 8, characterized in that the emulsions contain rape oil as natural oil.

10. The use of oil-in-water emulsions according to one of claims 1 to 9, characterized in that the emulsions contain an oil phase ratio of from 1 to 90% by weight, preferably from 1 to 50% by weight, and more preferably from 5 to 30% by weight, based on the overall emulsion, and are added to said water-bearing system in an amount of from 1 to 200 ppm, preferably from 5 to 100 ppm, and more preferably from 10 to 50 ppm.

11. Use of the oil-in-water emulsion according to claims 1 to 10 in paper manufacturing.

12. Use of the oil-in-water emulsion according to claim 11 in the de-inking process, particularly for preventing decomposition of hydrogen peroxide by catalase.

13. Use of the oil-in-water emulsion according to claims 1 to 10 in the production of sugar from sugar beets, particularly for the treatment of aqueous suspensions containing chipped sugar beets.

14. Use of the oil-in-water emulsion according to claims 1 to 10 in cooling and heat circulations.

15. Use of the oil-in-water emulsion according to claims 1 to 10 in water-based drilling fluids.

16. Use of the oil-in-water emulsion according to claims 1 to 10 in process and waste water systems.

## Revendications

1. Utilisation d'émulsions huile-dans-eau pour empêcher la formation de produits mucilagineux et diminuer la croissance de microbes dans des systèmes de conduite d'eau, plus particulièrement dans des eaux de traitement pour le transport de matières et l'échange de chaleur, caractérisée en ce qu'elles contiennent au moins un émulsif pour l'oléophase et, à titre de constituant de l'oléophase, au moins l'une des matières suivantes, seules ou en mélange les unes aux autres :
1. un hydrocarbure saturé ou insaturé, à chaîne ouverte ou cyclique, normale ou isomérique, comportant de 8 à 30 atomes de carbone;
2. un alcool gras saturé ou insaturé, un acide gras saturé ou insaturé, un ester monoalkylique d'acide gras, un amide d'acide gras, ou un monoalkylamide d'un acide gras saturé ou insaturé, où l'alcool gras, les acides gras et les restes d'acides gras des composés précités comportent de 8 à 30 atomes de carbone;
3. un monoester ou un polyester d'un acide gras saturé ou insaturé comportant 4 à 30 atomes de carbone et d'un monoalcool et/ou d'un polyol, à l'exception des polyéthylèneglycols;
4. un polyamide d'acides gras saturés ou insaturés comportant de 8 à 30 atomes de carbone et de polyamines aliphatiques comportant de 2 à 6 atomes d'azote;
5. un terpène acyclique, de préférence monocyclique et/ou bicyclique, plus particulièrement un hydrocarbure terpénique et/ou un alcool terpénique,
et/ou
6. un composé de polyoxyalkylène à base d'oxydes d'alkylène et d'alcools gras en C₁₂ à C₁₈ et/ou d'acides gras en C₁₂ à C₁₈ et/ou de glycérides d'acides gras en C₁₂ à C₁₈.

2. Utilisation suivant la revendication 1, caractérisée par une combinaison d'au moins un alcool gras saturé ou insaturé et d'au moins un terpène acyclique, de préférence, monocyclique et/ou bicyclique.

3. Utilisation d'émulsions huile-dans-eau suivant la revendication 1, caractérisée en ce qu'elles contiennent, à titre d'hydrocabure saturé, de l'octane, du tétradécane, de l'octadécane et/ou, à titre d'hydrocarbure insaturé, du décène, de l'hexadécéne et/ou des alpha-oléfines industrielles.

4. Utilisation d'émulsions huile-dans-eau suivant la revendication 1, caractérisée en ce qu'elles contiennent, à titre d'alcools gras, de l'octanol, du dodécanol, du tridécanol, de l'hexadécanol, de l'octadécanol et/ou de l'alcool béhénylique.

5. Utilisation de l'émulsion suivant l'une quelconque des revendications 1 à 4, caractérisée en ce qu'elle contient, à titre d'acide gras, de l'acide caproïque, de l'acide stéarique, de l'acide mélissique, de l'acide oléique et/ou de l'acide linoléique.

6. Utilisation d'émulsions huile-dans-eau suivant l'une quelconque des revendications 1 à 5, caractérisée en ce qu'elles contiennent, à titre d'ester d'acide gras, du stéarate de méthyle, du palmitate d'octadécyle, de l'oléate d'octyle, du mono- et/ou du trioléate de glycérine, du dilaurate d'éthylèneglycol, des stéarates et/ou oléates de sorbitan et/ou de l'adipate de dibutyle.

7. Utilisation d'émulsions huile-dans-eau suivant l'une quelconque des revendications 1 à 6, caractérisée en ce qu'elles contiennent, à titre d'amide d'acide gras, du stéarylamide, du butylamide d'acide gras de coco, de l'oléylamide d'acide acétique et/ou de l'éthylènebisstéarylamide.

8. Utilisation d'émulsions huile-dans-eau suivant l'une quelconque des revendications 1 à 7, caractérisée en ce qu'elle contiennent, à titre de composé polyoxyalkylénique, du poly(oxyde d'éthylène) et/ou du poly(oxyde de propylène), où la proportion d'oxyde d'éthylène varie de 0 à 20% en poids dans le polymère.

9. Utilisation d'émulsions huile-dans-eau suivant l'une quelconque des revendications 1 à 8, caractérisée en ce qu'elles contiennent de l'huile de colza à titre d'huile naturelle.

10. Utilisation d'émulsions huile-dans-eau suivant l'une quelconque des revendications 1 à 9, caractérisée en ce qu'elle contiennent une fraction d'oléophase de 1 à 90% en poids, de préférence, de 1 à 50% en poids et, de manière tout particulièrement avantageuse, de 5 à 30% en poids, par rapport à l'émulsion totale et en ce qu'on les introduit dans le système conduisant de l'eau entre une proportion de 1 à 200 ppm, de préférence, 5 à 100 ppm et, de manière plus particulièrement avantageuse encore, de 10 à 50 ppm.

11. Utilisation d'émulsions huile-dans-eau suivant l'une quelconque des revendications 1 à 10, au cours de la fabrication du papier.

12. Utilisation de l'émulsion huile-dans-eau suivant la revendication 11, dans le procédé de Deinking, plus particulièrement, en vue de l'inhibition de la décomposition du peroxyde d'hydrogène par la catalase.

13. Utilisation de l'émulsion huile-dans-eau suivant l'une quelconque des revendications 1 à 10, au cours de la récupération du sucre des cannes à sucre, plus particulièrement en vue du traitement des suspensions aqueuses avec des cannes à sucre déchiquetées.

14. Utilisation de l'émulsion huile-dans-eau suivant l'une quelconque des revendications 1 à 10, dans des circuits de refroidissement et de chauffage.

15. Utilisation de l'émulsion huile-dans-eau suivant l'une quelconque des revendications 1 à 10, dans des rinçages de forage à base d'eau.

16. Utilisation de l'émulsion huile-dans-eau suivant l'une quelconque des revendications 1 à 10, dans des systèmes d'eaux industrielles ou non potables ou d'eaux résiduaires.
